# FASCICULE DE BREVET EUROPEEN

(11) **EP 2 946 125 B1**
(45) Date de publication et mention de la délivrance du brevet: **10.10.2018**
(21) Numéro de dépôt: 14700737.1
(22) Date de dépôt: 17.01.2014
(51) Int. Cl.: F16F 1/32

(54) **ELEMENT DE SUSPENSION POUR LA LIAISON MECANIQUE D'UNE CHARGE SUSPENDUE DANS UN SUPPORT**
AUFHÄNGUNGSELEMENT FÜR DIE MECHANISCHE FIXIERUNG EINER INNERHALB EINER HALTERUNG AUFGEHÄNGTEN LAST
SUSPENSION ELEMENT FOR THE MECHANICAL ATTACHMENT OF A LOAD SUSPENDED WITHIN A MOUNT

(30) Priorité: 18.01.2013 FR 1300105
(43) Date de publication de la demande: 25.11.2015
(73) Titulaire: THALES, 92400 Courbevoie (FR)
(72) Inventeur: COLLARD, Eric, F-78995 Elancourt Cedex (FR); TARDIF, Fabrice, F-78995 Elancourt Cedex (FR)
(74) Mandataire: Henriot, Marie-Pierre
(86) Numéro de dépôt international: PCT/EP2014/050921
(87) Numéro de publication internationale: WO 2014/111534

(56) Documents cités:
- EP-A1- 0 535 628
- DE-A1- 19 610 692
- US-A- 5 358 210
- US-A1- 2005 184 601
- US-A1- 2007 257 569

## Description

La présente invention concerne un élément de suspension pour la liaison mécanique d'une charge suspendue dans un support. Elle s'applique notamment à la suspension de matériel nécessitant de très bonnes performances en isolation vibratoire.

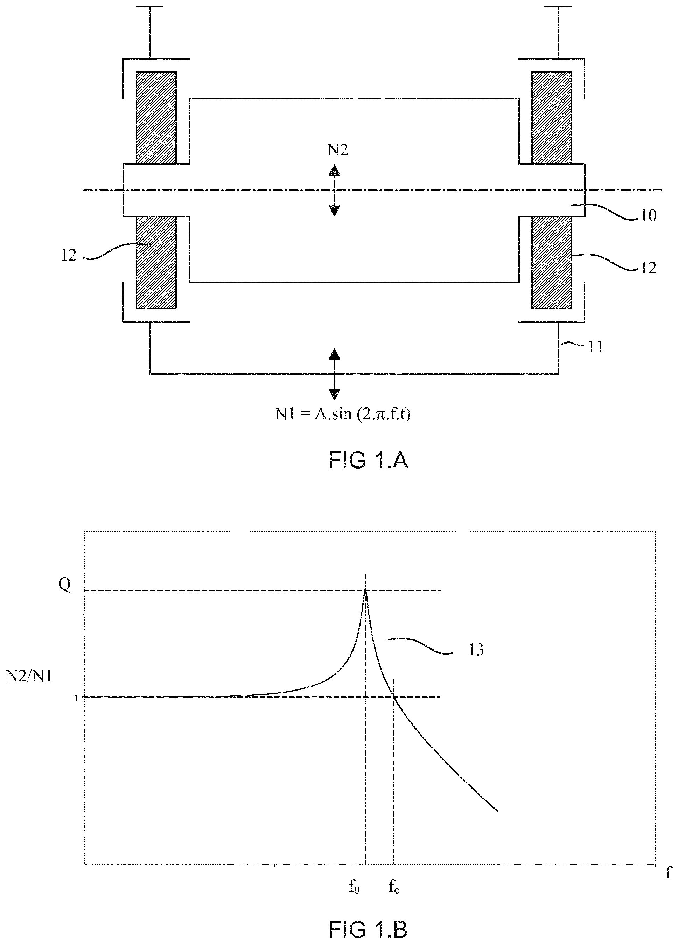

Dans le domaine des équipements aéroportés par exemple, notamment les équipements de type bancs optiques ou radars suspendus, l'environnement vibratoire est généré par les vibrations transmises par l'avion porteur et les turbulences aérodynamiques sur la structure extérieure de l'équipement. La solution actuelle d'isolation vibratoire de la structure de l'équipement aéroporté utilise des amortisseurs passifs en élastomère. Les figures 1A et 1B représentent respectivement le schéma d'une charge 10 suspendue dans un support rigide 11 au moyen d'une liaison mécanique comprenant deux éléments de suspension 12 de type amortisseurs en élastomère et une courbe 13 montrant en échelle logarithmique l'allure du module de la fonction de transfert associée à cette liaison en fonction de la fréquence d'excitation f . La courbe 13 est obtenue par exemple en prenant le rapport entre les amplitudes N₂/N₁ d'accélération respectivement de la charge (N₂) et du support (N₁) quand ce dernier est soumis à une excitation sinusoïdale d'amplitude d'accélération A et de fréquence f données. La courbe 13 montre qu'à basse fréquence, le module de la fonction de transfert vaut 1, c'est-à-dire que N₂ et N₁ présentent un déplacement similaire, puis, pour une fréquence donnée f₀, dite fréquence de résonance, la fonction de transfert présente une valeur maximale Q, appelée valeur de surtension. La valeur de la fréquence de résonance est liée essentiellement à la raideur de la liaison et la valeur de la surtension est liée à l'amortissement. Une liaison peu amortie présente une forte valeur de surtension et la valeur de la fréquence de résonance est d'autant plus petite que la raideur est faible (à masse de la charge donnée). Au dessus d'une valeur de fréquence f_{c} dite fréquence de coupure, on observe un filtrage des vibrations (fonction de transfert inférieure à 1).

Parmi les principaux inconvénients constatés aujourd'hui sur ce type de liaison utilisant des amortisseurs en élastomère, on note en particulier des variations importantes des performances (raideur, amortissement) en fonction de la température et des amplitudes et fréquences de vibration, dues aux non-linéarités de l'élastomère, une dispersion des raideurs des amortisseurs d'une production à l'autre, engendrant des résidus de rotation importants de l'équipement suspendu, ainsi qu'une possibilité de fluage de l'élément de suspension après l'application de cycles thermiques ou d'accélération vibratoire ou statique engendrant une modification de la position relative de la charge par rapport au support. Ces inconvénients sont accentués par l'anisotropie de la raideur de l'élément de suspension ainsi constitué.

La présente invention propose une structure originale de l'élément de suspension permettant d'assurer selon un exemple particulier de réalisation une isotropie de raideur à mieux que 10% et, de façon générale, permettant d'ajuster la raideur à des valeurs données dans les trois dimensions, indépendamment. On obtient un élément de suspension qui filtre les vibrations.

Pour cela l'invention propose un élément de suspension pour la liaison mécanique d'une charge suspendue dans un support, présentant une raideur. Il est principalement caractérisé en ce qu'il comprend au moins deux interfaces mécaniques respectivement avec la charge et avec le support, et au moins deux lames raccordant chacune des deux interfaces dans une liaison complète, la raideur de l'élément étant ajustée à des valeurs données selon trois axes orthogonaux en fonction du nombre de lames, de leur répartition entre lesdites interfaces et de leurs dimensions en longueur, épaisseur et profondeur.

Avantageusement, les lames sont réparties entre les interfaces avec une symétrie cyclique, ce qui permet un ajustement isotrope de la raideur.

Avantageusement, la structure formée par les interfaces et les lames est métallique et l'élément de suspension selon l'invention comprend en outre au moins un élément d'amortissement positionné entre deux lames et/ou entre une lame et une interface mécanique, ce qui permet d'associer les caractéristiques de raideur stable et linéaire d'un matériau métallique, avec les caractéristiques d'amortissement d'un matériau de type élastomère.

D'autres avantages et caractéristiques apparaîtront plus clairement à la lecture de la description qui suit, illustrée par les figures annexées qui représentent :
- les figures 1A et 1B, le schéma d'une liaison avec deux éléments de suspension et une courbe donnant la fonction de transfert de la suspension (déjà décrites);
- les figures 2A et 2B, deux premiers exemples d'un élément de suspension selon l'invention présentant une structure plane;
- la figure 3, un exemple d'élément de suspension selon l'invention présentant une structure en trois dimensions ;
- la figure 4, le schéma d'une section S rectangulaire d'une lame de l'élément de suspension selon l'invention ;
- la figure 5, une courbe donnant en fonction de la longueur des lames les caractéristiques optimales de la section desdites lames pour assurer l'isotropie;
- la figure 6, un schéma montrant un congé de raccordement entre une lame et une interface;
- la figure 7, un schéma montrant le positionnement et la forme d'un plot en élastomère selon un exemple de réalisation;
- la figure 8, un exemple d'élément de suspension avec élément d'amortissement selon une variante;
- les figures 9A et 9B, les vues d'un autre exemple de réalisation d'un élément de suspension avec élément d'amortissement selon l'invention.

Sur ces figures, les éléments identiques sont indexés par les mêmes repères.

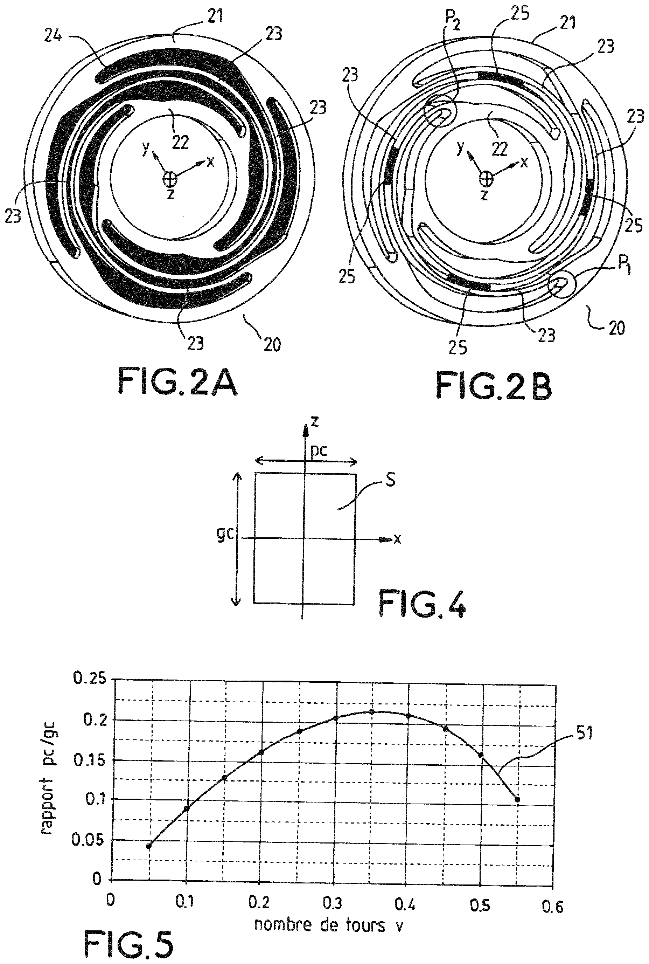

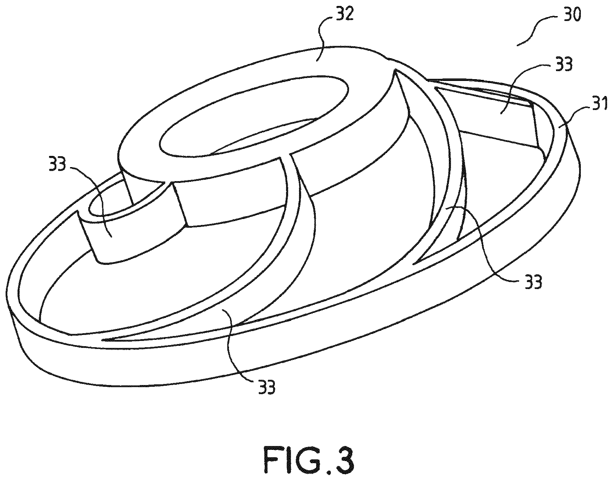

Les figures 2A, 2B et 3 représentent des exemples de réalisation d'un élément de suspension pour la liaison mécanique d'une charge suspendue dans un support selon l'invention.

Dans les exemples représentés sur les figures 2A et 2B, l'élément de suspension 20 comprend deux interfaces mécaniques 21 et 22 respectivement avec la charge et avec le support (non représentés). Par exemple, la charge est en liaison avec l'interface interne 22 et le support en liaison avec l'interface externe 21. L'inverse est également possible. Selon cet exemple, les interfaces sont concentriques ce qui présente des facilités de conception et de réalisation. Selon l'invention, l'élément de suspension comprend au moins deux lames 23 qui raccordent chacune des deux interfaces 21 et 22 dans une liaison complète. Les lames sont reliées par des points de raccordement dont deux d'entre eux sont référencés sur la figure 2B (respectivement P₁ et P₂ pour les points de raccordement aux interfaces 21 et 22). Dans ces exemples, la structure formée par les interfaces et les lames est plane, et donc particulièrement facile à réaliser. Mais d'autres formes de structures sont possibles. Ainsi, l'exemple de la figure 3 montre un élément de suspension 30 dans lequel les interfaces forment avec les lames une structure à trois dimensions. Cette variante peut être intéressante pour répondre à des problèmes d'encombrement ou d'interfaces particuliers. On retrouve sur la figure 3 des interfaces mécaniques concentriques 31 et 32, des lames 33 raccordant les interfaces dans une liaison complète.

Dans ces exemples, les interfaces mécaniques sont des bagues circulaires, simples à réaliser. Mais d'autres types d'interfaces sont envisageables selon les géométries de la charge et du support. Il suffit qu'elles soient adaptées à l'agencement des lames. Avantageusement, les interfaces forment avec les lames une structure homogène réalisée en un matériau présentant une forte linéarité de raideur, par exemple une structure métallique, de type acier. D'autres matériaux sont envisageables, du type matériau composite. Pour des raisons de coût de fabrication et de meilleure résistance, la structure est de manière préférentielle monolithique, c'est-à-dire réalisée en une seule pièce, par exemple par fraisage.

Grâce à cette architecture originale de l'élément de suspension, la déposante a montré qu'il est possible par un dimensionnement approprié des lames et une répartition de celles-ci entre les interfaces d'ajuster la raideur de l'élément de suspension à des valeurs données selon trois axes orthogonaux, deux axes radiaux notés X et Y et un axe axial noté Z sur les figures 2A et 2B. L'ajustement peut être fait indépendamment selon les trois axes. Le fait de pouvoir ajuster la raideur dans les trois dimensions peut présenter de nombreux avantages dans un grand nombre d'applications. Par exemple, il peut être intéressant d'avoir une suspension plus raide selon un axe (radial ou axial) pour compenser un niveau vibratoire ou de choc plus élevé afin de limiter le débattement, ou pour mieux découpler la fréquence de la suspension dans un axe avec celle de la partie suspendue dans le même axe. Selon l'invention, le contrôle de la raideur se fait par le dimensionnement des lames, c'est-à-dire leur nombre, leur longueur, leur épaisseur et leur profondeur, ainsi que par leur répartition entre les interfaces, c'est-à-dire leur positionnement les unes par rapport aux autres. Dans le cas d'interfaces concentriques, la longueur est donnée par exemple en nombre de tours entre leurs deux points de raccordement P₁, P₂ (figure 2B) aux interfaces, l'épaisseur correspond à la dimension radiale et la profondeur à la dimension axiale. L'application d'une méthode de type analytique utilisant la théorie de la résistance des matériaux en couche mince (hypothèse d'un matériau de faible épaisseur comparée à la longueur) ou en couche épaisse permet le dimensionnement des lames. Ce dimensionnement est également possible en utilisant une méthode de simulation en éléments finis de l'élément de suspension.

La déposante a montré qu'il est nécessaire d'avoir au moins deux lames dans l'élément de suspension selon l'invention pour pouvoir ajuster la raideur selon les trois axes. Notamment, la déposante a montré que l'ajustement de la raideur axiale (selon l'axe Z) par rapport à la raideur radiale dépend de la profondeur des lames et plus particulièrement de la valeur de la profondeur comparée à celle de l'épaisseur. Ainsi, dans l'exemple de lames de section présentant un petit côté et un grand côté, par exemple une section de type rectangulaire, tel que c'est le cas dans les exemples de réalisation des figures 2A, 2B et 3, la valeur de la raideur axiale par rapport à la raideur radiale dépend du rapport pc/gc entre le petit côté pc et le grand côté gc de la section. La figure 4 montre la section S d'une lame correspondant à une coupe selon un axe radial. Le petit côté (pc) correspond à l'épaisseur de la lame, le grand côté (gc) à sa profondeur. Cette remarque se vérifie également pour d'autres formes de sections (elliptique, trapézoïdale, etc.).

Selon un exemple particulier d'application, on peut chercher à obtenir une isotropie de la raideur, c'est-à-dire une raideur sensiblement égale selon les trois axes X, Y, Z. La déposante a montré que l'isotropie peut être obtenue par l'agencement d'au moins deux lames, et de façon préférentielle au moins trois, réparties entre les interfaces selon une symétrie cyclique, comme c'est le cas dans les exemples des figures 2A, 2B et 3. Un exemple particulier de dimensionnement des lames permettant d'obtenir une isotropie de la raideur à mieux que 10% dans un exemple d'élément de suspension à structure plane tel qu'il est représenté sur les figures 2A et 2B est donné par la courbe de la figure 5. La déposante a montré que dans le cas d'une structure plane, l'isotropie peut être obtenue en ajustant le rapport pc/gc en fonction de la valeur de la longueur de la lame donnée en nombre de tours v. La courbe 51 montre ainsi pour différentes valeurs de longueur v des lames, le rapport pc/gc qu'il faut choisir pour obtenir l'isotropie. Cette courbe est obtenue par des lames de forme courbe, avec une courbure continue de type spirale. Par exemple, dans le cas des figures 2A et 2B, la longueur des lames est de 0,5 tour environ entre leurs points de raccordement aux interfaces, notés P₁ et P₂. Ainsi, dans l'exemple de la figure 5, le rapport pc/gc se situe entre 0,1 et 0,2, autour de 0,16. Une telle configuration donne une très bonne isotropie de la raideur de l'élément de suspension, à mieux que 2%.

Dans l'exemple des figures 2A et 2B, l'élément de suspension présente quatre lames, réparties selon une symétrie cyclique, de forme courbe avec une courbure continue, par exemple selon une forme en spirale. Cet agencement est particulièrement intéressant pour répondre à la fois aux problèmes d'encombrement entre les deux interfaces et pour rendre minimal le niveau de contrainte de la structure. Le choix d'une longueur de lame suffisante (ici 0,5 tour) permet de réduire les contraintes maximales observées. De la même manière, on pourra choisir un plus grand nombre de lames pour réduire le niveau de contraintes tout en veillant à ce qu'il n'y ait pas d'interférences entre les lames dans les plages de débattement de l'élément de suspension.

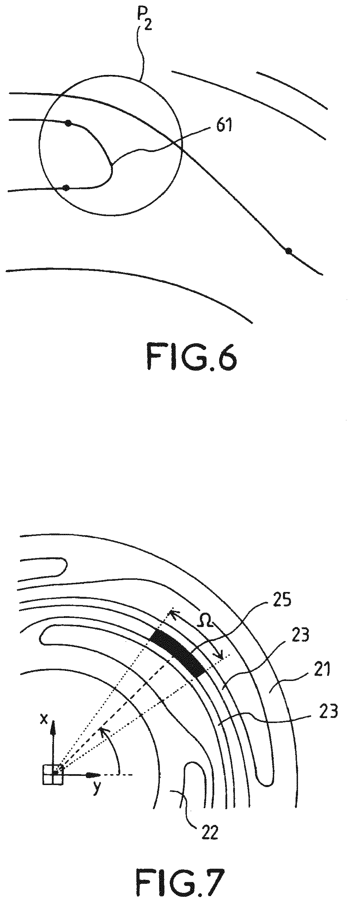

La déposante a montré également qu'une forme adaptée des raccords entre les lames et les interfaces permet de réduire les concentrations de contraintes de façon très significative. Un tel raccord, noté P₁ ou P₂ sur la figure 2B est montré sur la figure 6. Selon cette variante, le congé de raccordement 61 (forme intérieure du raccord) présente une continuité en courbure, ce qui permet d'éviter les concentrations de contraintes à l'intérieur du congé, source de fissures.

Selon une variante particulièrement intéressante de l'invention, l'élément de suspension comprend en outre au moins un élément d'amortissement, permettant de réaliser un élément de suspension avec raideur et amortissement. La combinaison d'une structure de type métallique à très bonne linéarité de raideur et à raideur contrôlée selon les trois dimensions telle qu'elle a été décrite précédemment, avec un élément d'amortissement, présente de nombreux avantages par rapport aux éléments de suspension de l'art antérieur, et plus particulièrement aux éléments de suspension en élastomère. Notamment, les variations des performances (raideur, amortissement) en fonction de la température, des amplitudes et des fréquences de vibration sont réduites, la dispersion des raideurs des amortisseurs d'une production à l'autre qui engendrait des résidus de rotation importants de l'équipement suspendu est également réduite, ainsi que la variation de position relative entre la charge par rapport au support due au fluage de l'élément de suspension après l'application de cycles thermiques ou d'accélération vibratoire ou statique. Dans le cas de charges suspendues destinées à être aéroportées, l'élément de suspension selon l'invention permet de limiter le débattement en choc d'appontage-catapultage dû à la baisse importante de la raideur de l'élastomère pour ce type de sollicitation. Par ailleurs, la raideur statique du métal est identique à sa raideur dynamique, ce qui évite de trop grand débattement sous facteur de charge.

Il est à noter que l'élément d'amortissement apporte aussi de la raideur et que le dimensionnement de l'élément de suspension doit prendre en compte à la fois la structure formée des lames et des interfaces et l'élément d'amortissement pour régler la raideur selon les trois axes et notamment obtenir une isotropie de raideur.

Les figures 2A et 2B montrent deux exemples de réalisation d'éléments de suspension combinant raideur contrôlée et amortissement. Dans l'exemple de la figure 2A, l'élément d'amortissement est formé d'un voile 24 en élastomère qui remplit tous les interstices entre les lames et les lames et les interfaces. Dans l'exemple de la figure 2B, l'élément de suspension comprend plusieurs éléments d'amortissement formés de plots en élastomère et positionnés entre les lames et/ou entre une lame et une interface. Avantageusement, dans le cas d'un élément de suspension dans lequel on recherche une isotropie de la raideur, on peut prévoir au moins autant de plots que de lames, également répartis selon une symétrie cyclique, afin de préserver l'isotropie de raideur, comme c'est le cas dans l'exemple de la figure 2B. Ainsi, dans cet exemple, 4 plots en élastomère sont prévus, répartis selon une symétrie cyclique, et positionnés sensiblement à 90° des points de raccordement des lames.

La figure 7 montre un détail de l'agencement d'un tel plot 25. Selon cet exemple, le plot présente une profondeur identique à celle des lames et une longueur définie par l'ouverture angulaire Ω comprise entre 20° et 30°, permettant d'assurer un amortissement important et une très bonne isotropie de cet amortissement selon les trois dimensions.

Selon une autre variante, des plots en élastomère sont fixés sur une seule lame en garantissant un jeu avec la lame en vis-à-vis et sont positionnés de part et d'autre de chacun des plots 25 de la figure 7, ce qui permet d'accroître la raideur en fonction de la course de l'élément de suspension. Cet avantage permet d'obtenir une raideur progressive et continue en fin de course et d'absorber les chocs bien mieux que ne peuvent le faire des butées, qui, utilisées en parallèle d'une suspension classique, présentent une forte discontinuité de raideur et pas forcement de progressivité une fois sollicitées. Par exemple, les plots peuvent être placés au niveau des congés de raccordement, entre les lames et les interfaces.

D'autres variantes sont possibles pour combiner à la structure formée des interfaces et des lames un élément d'amortissement.

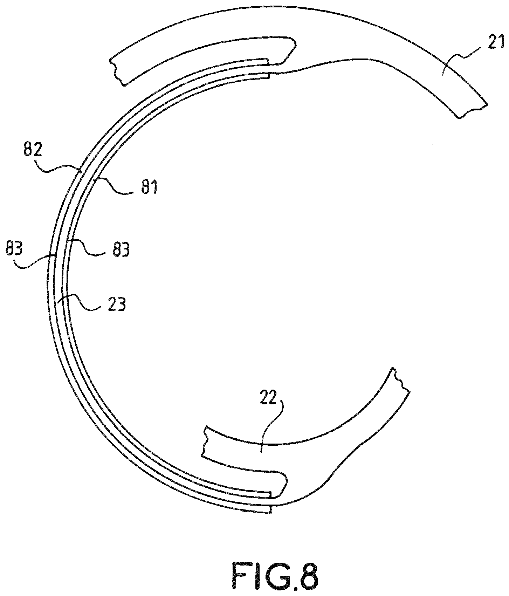

La figure 8 représente une première variante. Sur cette figure, par souci de clarté, une seule lame 23 est représentée, cette lame raccordant deux interfaces 21 et 22 représentées en partie. Selon cet exemple, deux lames supplémentaires 81, 82 sont collées de part et d'autre d'une lame 23 raccordant les deux interfaces par une colle en élastomère qui forme une couche 83 assurant l'amortissement de la structure. Il est également possible de prévoir une seule lame supplémentaire collée sur un côté de la lame 23. Avantageusement, la forme de la lame supplémentaire (81, 82) épouse celle de la lame 23. Un tel élément d'amortissement réalisé par collage d'une lame supplémentaire permet d'apporter de l'amortissement sans trop modifier la raideur de la structure.

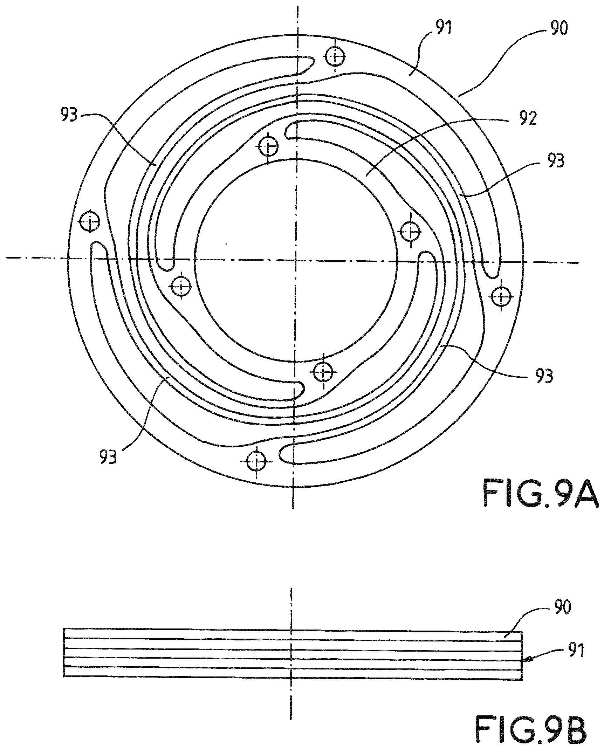

Les figures 9A et 9B représentent une seconde variante, selon deux vues. Elle consiste en la réalisation d'une structure « sandwich », alternant des structures élémentaires planes, fines, formées d'interfaces et d'au moins deux lames les raccordant telles qu'elles ont été décrites précédemment avec des couches en élastomère, de telle sorte que l'élément de suspension obtenu présente au moins un élément d'amortissement entre deux lames de deux structures élémentaires adjacentes. La figure 9A montre une vue de face de l'élément de suspension ainsi obtenu, selon un exemple. La forme de la structure plane élémentaire 90 est dans cet exemple similaire à celle de la structure de l'élément de suspension de la figure 2B, avec deux interfaces concentriques 91, 92 et des lames 93 les raccordant, mais la profondeur des lames est ici de quelques millimètres seulement. Sur la figure 9B la structure sandwich est montrée selon une vue de côté. Dans cet exemple, cinq structures élémentaires 90 sont collées par une couche en élastomère 91. La structure sandwich est par exemple obtenue en collant les unes contre les autres au moyen de colle élastomère des lamelles métalliques puis en procédant à un fraisage de l'ensemble de telle sorte à obtenir la forme voulue. Une autre façon de procéder consiste à découper d'abord les structures élémentaires puis à les coller avec la colle élastomère.

## Revendications

1. Elément de suspension (20, 30) pour isolation vibratoire, pour la liaison mécanique d'une charge suspendue dans un support, présentant une raideur, **caractérisé en ce qu'**il comprend au moins deux interfaces mécaniques (21, 31, 22, 32) respectivement avec la charge et avec le support, et au moins deux lames (23, 33) raccordant chacune des deux interfaces dans une liaison complète, lesdites interfaces formant avec lesdites lames une structure monolithique, la raideur de l'élément étant ajustée à des valeurs données selon trois axes orthogonaux en fonction du nombre de lames, de leur répartition entre lesdites interfaces et de leurs dimensions en longueur, épaisseur et profondeur, comprenant en outre au moins un élément d'amortissement (24, 25).

2. Elément de suspension selon la revendication 1, dans lequel les lames sont réparties entre lesdites interfaces selon une symétrie cyclique.

3. Elément de suspension selon l'une des revendications précédentes, dans lequel un élément d'amortissement au moins est formé d'un plot en élastomère (25) disposé entre les lames ou entre les lames et les interfaces.

4. Elément de suspension selon la revendication précédente, comprenant au moins autant de plots en élastomère que de lames.

5. Elément de suspension selon l'une des revendications précédentes, dans lequel un élément d'amortissement est formé d'une couche en élastomère (83) située entre au moins une desdites lames (23) et au moins une lame supplémentaire (81, 82) collée à ladite lame par ladite couche.

6. Elément de suspension selon l'une des revendications précédentes, dans lequel les lames présentent entre leurs deux points de raccordement (P₁, P₂) avec chacune desdites interfaces une forme courbe, à courbure continue.

7. Elément de suspension selon l'une des revendications précédentes, dans lequel le congé de raccordement (61) de chaque lame avec chacune des interfaces présente une continuité en courbure.

8. Elément de suspension selon l'une des revendications précédentes, dans lequel lesdites interfaces et lesdites lames sont réalisées en un matériau présentant une forte linéarité de raideur.

9. Elément de suspension selon la revendication précédente, dans lequel ledit matériau est un acier.

10. Elément de suspension selon l'une des revendications précédentes, dans lequel les interfaces respectivement avec la charge et le support sont sensiblement concentriques.

11. Elément de suspension (20) selon l'une des revendications précédentes, dans lequel lesdites interfaces sont au nombre de deux et forment avec lesdites lames une structure plane.

12. Elément de suspension selon la revendication précédente, dans lequel lesdites interfaces sont sensiblement concentriques, dans lequel au moins trois lames de forme courbe à courbure continue raccordent lesdites interfaces, la longueur des lames (v) donnée en nombre de tours entre les deux points de raccordement avec les interfaces étant sensiblement identique, les lames étant réparties entre lesdites interfaces selon une symétrie cyclique, et dans lequel lesdites lames sont à section (S) présentant un petit côté (pc) et un grand côté (gc), la valeur du rapport entre le petit côté et le grand côté étant déterminée en fonction de la longueur des lames pour assurer l'isotropie en raideur de l'élément de suspension avec une erreur inférieure à 10%.

13. Elément de suspension selon la revendication précédente, dans lequel la section est de forme rectangulaire, elliptique ou trapézoïdale.

14. Elément de suspension selon la revendication précédente, dans lequel la longueur des lames est sensiblement égale à un demi-tour et la valeur dudit rapport entre le petit côté et le grand côté comprise entre 0,1 et 0,2.

15. Elément de suspension (30) selon l'une des revendications 1 à 10, dans lequel lesdites interfaces sont au nombre de deux et forment avec lesdites lames une structure à trois dimensions.

16. Elément de suspension selon l'une des revendications 1 à 10, dans lequel les interfaces sont en nombre pair, formant avec lesdites lames un nombre donné supérieur ou égal à deux de structures planes élémentaires (90) à deux interfaces (91, 92) respectivement avec le support et la charge, lesdites structures étant sensiblement identiques et plaquées les unes aux autres avec au moins un élément d'amortissement se trouvant entre deux lames appartenant à deux structures élémentaires adjacentes.

17. Elément de suspension selon la revendication précédente, dans lequel lesdites structures sont collées les unes aux autres par une couche en élastomère (91) formant ledit élément d'amortissement.

## Patentansprüche

1. Aufhängungselement (20, 30) zur Schwingungsisolation, für die mechanische Verbindung einer aufgehängten Last in einer Halterung, welches eine Steifigkeit aufweist, **dadurch gekennzeichnet, dass** es mindestens zwei mechanische Schnittstellen (21, 31, 22, 32) beinhaltet, jeweils mit der Last und mit der Halterung, und mindestens zwei Blätter (23, 33), welche jede der beiden Schnittstellen in einer vollständigen Verbindung anschließen, wobei die Schnittstellen mit den Blättern eine monolithische Struktur bilden, wobei die Steifigkeit des Elements auf gegebene Werte in drei orthogonalen Achsen entsprechend der Anzahl der Blätter, ihrer Verteilung zwischen den Schnittstellen und ihrer Abmessungen in Bezug auf Länge, Dicke und Tiefe justiert wird, und welches zudem mindestens ein Dämpfungselement (24, 25) beinhaltet.

2. Aufhängungselement nach Anspruch 1, bei welchem die Blätter zwischen den Schnittstellen entsprechend einer zyklischen Symmetrie verteilt sind.

3. Aufhängungselement nach einem der vorhergehenden Ansprüche, bei welchem mindestens ein Dämpfungselement aus einem Elastomerauflager (25) gebildet ist, welches zwischen den Blättern oder zwischen den Blättern und den Schnittstellen angeordnet ist.

4. Aufhängungselement nach dem vorhergehenden Anspruch, welches mindestens ebenso viele Elastomer-Auflager wie Blätter beinhaltet.

5. Aufhängungselement nach einem der vorhergehenden Ansprüche, bei welchem ein Dämpfungselement aus einer Elastomerschicht (83) gebildet ist, welche sich zwischen mindestens einem der Blätter (23) und mindestens einem zusätzlichen Blatt (81, 82) befindet, welches durch die Schicht an das Blatt geklebt ist.

6. Aufhängungselement nach einem der vorhergehenden Ansprüche, bei welchem die Blätter zwischen ihren beiden Anschlusspunkten (P₁, P₂) mit jeder der Schnittstellen eine gekrümmte Form mit kontinuierlicher Krümmung aufweisen.

7. Aufhängungselement nach einem der vorhergehenden Ansprüche, bei welchem die Anschlusskehle (61) eines jeden Blattes mit jeder der Schnittstellen eine Krümmungskontinuität aufweist.

8. Aufhängungselement nach einem der vorhergehenden Ansprüche, bei welchem die Schnittstellen und die Blätter aus einem Material gefertigt sind, welches eine starke Steifigkeits-Linearität besitzt.

9. Aufhängungselement nach dem vorhergehenden Anspruch, bei welchem das Material ein Stahl ist.

10. Aufhängungselement nach einem der vorhergehenden Ansprüche, bei welchem die Schnittstellen mit der jeweiligen Last und Halterung im Wesentlichen konzentrisch sind.

11. Aufhängungselement (20) nach einem der vorhergehenden Ansprüche, bei welchem die Schnittstellen zwei in der Anzahl betragen und mit den Blättern eine ebene Struktur bilden.

12. Aufhängungselement nach dem vorhergehenden Anspruch, bei welchem die Schnittstellen im Wesentlichen konzentrisch sind, bei welchem mindestens drei Blätter mit gekrümmter Form mit kontinuierlicher Krümmung die Schnittstellen anschließen, wobei die Länge der Blätter (v), welche in Anzahl Umdrehungen zwischen den beiden Anschlusspunkten mit den Schnittstellen angegeben wird, im Wesentlichen identisch ist, wobei die Blätter zwischen den Schnittstellen gemäß einer zyklischen Symmetrie verteilt sind, und wobei die Blätter einen Querschnitt (S) besitzen, welcher eine kleine Seite (pc) und eine große Seite (gc) aufweist, wobei der Wert des Verhältnisses zwischen der kleinen Seite und der großen Seite entsprechend der Länge der Blätter bestimmt wird, um die Isotropie in Bezug auf die Steifigkeit des Aufhängungselementes mit einem Fehler unter 10 % zu gewährleisten.

13. Aufhängungselement nach dem vorhergehenden Anspruch, bei welchem der Querschnitt eine rechteckige, elliptische oder trapezartige Form besitzt.

14. Aufhängungselement nach dem vorhergehenden Anspruch, bei welchem die Länge der Blätter im Wesentlichen einer halben Umdrehung entspricht und der Wert des Verhältnisses zwischen der kleinen Seite und der großen Seite zwischen 0,1 und 0,2 beträgt.

15. Aufhängungselement (30) nach einem der Ansprüche 1 bis 10, bei welchem die Schnittstellen zwei in der Anzahl betragen und mit den Blättern eine dreidimensionale Struktur bilden.

16. Aufhängungselement (30) nach einem der Ansprüche 1 bis 10, bei welchem die Schnittstellen in geradzahliger Anzahl vorliegen, mit den Blättern eine gegebene Anzahl größer oder gleich zwei ebener Elementarstrukturen (90) mit zwei Schnittstellen (91, 92) bilden, jeweils mit der Halterung und der Last, wobei die Strukturen im Wesentlichen identisch und mit mindestens einem Dämpfungselement aneinander gedrückt sind, welches zwischen zwei Blättern befindlich ist, welche zu zwei aneinander grenzenden Elementarstrukturen gehören.

17. Aufhängungselement nach dem vorhergehenden Anspruch, bei welchem die Strukturen durch eine Elastomerschicht (91) aneinander geklebt sind, welche das Dämpfungselement bildet.

## Claims

1. Suspension element (20, 30) for vibration insulation for the mechanical connection of a load which is suspended in a support, having a rigidity, **characterized in that** it comprises at least two mechanical interfaces (21, 31, 22, 32) with the load and with the support, respectively, and at least two plates (23, 33) which connect each of the two interfaces in a complete connection, the interfaces forming a monolithic structure with the plates, the rigidity of the element being adjusted to specific values along three orthogonal axes in accordance with the number of plates, their distribution between the interfaces and their dimensions in terms of length, thickness and depth, further comprising at least one damping element (24, 25).

2. Suspension element according to claim 1, wherein the plates are distributed between the interfaces in accordance with a cyclic symmetry.

3. Suspension element according to either of the preceding claims, wherein at least one damping element is formed by a stud (25) of elastomer material which is arranged between the plates or between the plates and the interfaces.

4. Suspension element according to the preceding claim, comprising at least as many studs of elastomer material as plates.

5. Suspension element according to any one of the preceding claims, wherein a damping element is formed by a layer (83) of elastomer material which is located between at least one of the plates (23) and at least one additional plate (81, 82) which is adhesively bonded to the plate by the layer.

6. Suspension element according to any one of the preceding claims, wherein the plates have, between their two connection locations (P₁, P₂) with each of the interfaces, a curved shape having continuous curvature.

7. Suspension element according to any one of the preceding claims, wherein the connection fillet (61) of each plate with each of the interfaces has continuity of curvature.

8. Suspension element according to any one of the preceding claims, wherein the interfaces and the plates are produced from a material which has a high degree of rigidity linearity.

9. Suspension element according to the preceding claim, wherein the material is a steel.

10. Suspension element according to any one of the preceding claims, wherein the interfaces with the load and the support, respectively, are substantially concentric.

11. Suspension element (20) according to any one of the preceding claims, wherein there are two interfaces which form a planar structure with the plates.

12. Suspension element according to the preceding claim, wherein the interfaces are substantially concentric, wherein at least three plates having a curved shape with continuous curvature connect the interfaces, the length of the plates (v) given as the number of turns between the two connection locations with the interfaces being substantially identical, the plates being distributed between the interfaces in accordance with a cyclic symmetry and wherein the plates have a cross-section (S) having a short side (pc) and a long side (gc), the value of the ratio between the short side and the long side being determined in accordance with the length of the plates in order to ensure the isotropy in terms of rigidity of the suspension element with an error less than 10%.

13. Suspension element according to the preceding claim, wherein the cross-section has a rectangular, elliptical or trapezoidal shape.

14. Suspension element according to the preceding claim, wherein the length of the plates is substantially equal to a half-turn and the value of the ratio between the short side and the long side is between 0.1 and 0.2.

15. Suspension element (30) according to any one of claims 1 to 10, wherein there are two interfaces which form a three-dimensional structure with the plates.

16. Suspension element according to any one of claims 1 to 10, wherein there is an even number of interfaces which form with the plates a specific number, greater than or equal to two, of planar elementary structures (90) having two interfaces (91, 92) with the support and the load, respectively, the structures being substantially identical and pressed against each other with at least one damping element which is located between two plates which belong to two adjacent elementary structures.

17. Suspension element according to the preceding claim, wherein the structures are adhesively bonded to each other by a layer (91) of elastomer material which forms the damping element.
